(19) **Europäisches Patentamt / European Patent Office / Office européen des brevets**

(11) **EP 2 164 056 A2**

(12) # EUROPEAN PATENT APPLICATION

(43) Date of publication:
**17.03.2010 Bulletin 2010/11**

(51) Int Cl.:
***G08B 13/196*** (2006.01)

(21) Application number: **09003883.7**

(22) Date of filing: **22.12.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.12.2004 US 593238 P**

(62) Document number(s) of the earlier application(s) in accordance with Art. 76 EPC:
**05850706.2 / 1 831 849**

(71) Applicant: **Emitall Surveillance S.A.**
**1820 Montreux (CH)**

(72) Inventors:
  • **Ebrahimi, Touradj**
  **1009 Pully (CH)**

  • **Dufaux, Frederic Albert**
  **39220 Bois D'Amont (FR)**

(74) Representative: **Novaimo**
**B.P. 50038**
**74802 La Roche-sur-Foron Cedex (FR)**

Remarks:
•Claims filed after the date of filing of the application (Rule 68(4) EPC).
•This application was filed on 18-03-2009 as a divisional application to the application mentioned under INID code 62.

(54) **Efficient scrambling of regions of interests in an image or video to preserve privacy**

(57) A smart video surveillance system comprising: at least one video surveillance system including a video surveillance camera system for capturing video signals representing video scenes and coding said video signals in accordance with a predetermined video format defining coded video signals and a server for storing and processing said coded video signals; the video surveillance system configured to capture and analyze said video signals and identify regions of interest within said video scenes by specifying for each pixel whether it is in the regions of interest or in the background, and scramble said regions of interest within said captured video scenes using the JPEG 2000 max-shift method for region of interest coding in order to scramble only the pixels of the regions of interest, said video signals representing said video scenes including the scrambled content to be decoded and played back by way of a decoder configured to decode said video signals in said predetermined video format without descrambling the pixels of said regions of interest, wherein said video surveillance system is configured to scramble using a JPEG 2000 implicit approach for region of interest encoding, in order to include in the region of interest all the code-blocks from resolution levels being lower than a chosen threshold.

Fig. 1

**Description**

CROSS REFERENCE TO RELATED APPLICATIONS

This application claims the benefit of US patent application no. 60/593,238, filed on December 27, 2004, hereby incorporated by reference.

BACKGROUND OF THE INVENTION

1. Field of the Invention

The present invention relates to a video surveillance system and more particularly to a video surveillance system which includes at least one video surveillance camera, configured to automatically sense persons and objects within a region of interest in video scenes and which scrambles regions of interest of a video scene in order to preserve the privacy of persons and objects captured video scenes, while leaving the balance of the video scene in tact and thus recognizable.

2. Description of the Prior Art

With the increase of threats and the high level of criminality, security remains a major public concern worldwide. Video surveillance is one approach to address this issue. Besides public safety, these systems are also useful for other tasks, such as regulating the flow of vehicles in crowded cities. Large video surveillance systems have been widely deployed for many years in strategic places, such as airports, banks, subways or city centers. However, many of these systems are known to be analog and based on proprietary solutions. It is expected that the next generation of video surveillance systems will be digital and based on standard technologies and IP networking.

Another expected evolution is towards smart video surveillance systems. Current systems are limited in their capability and are limited to capture, transmit and store video sequences. Such systems are known to rely on human operators to monitor screens in order to detect unusual or suspect situations and to set off an alarm. However, their effectiveness depends on the sustained attention of a human operator, known to be unreliable in the past. In order to overcome this problem, video surveillance systems have been developed which analyze and interpret captured video. For example, systems for analyzing video scenes and identifying human faces are disclosed in various patents and patent publications, such as: US Patent Nos. 5,835,616; 5,991,429; 6,496,594; 6,751,340; and US Patent Application Publication Nos. US 2002/0064314 AI; US 2002/0U4464 A3; US 2004/0005086 AI; US 2004/0081338 AI; US 2004/0175021 AI; US 2005/0013482 AI. Such systems have also been published in the literature. See for example; Hampapur et al, "Smart Surveillance: Applications, Technologies and Implications," Proceedings of the IEEE Pacific Rim Conference on Multimedia, Dec.2003, vol. 2, pages 1133-1138; and Cai et al, "Model Based Human Face Recognition in Intelligent Vision,", Proceedings of SPIE, volume 2904, October 1996, pages 88-99, all hereby incorporated by reference. While such systems are thought to provide a sense of increased security, other issues arise, such as a fear of a loss of privacy.

Surveillance systems have been developed which address the issue of privacy. For example, US Patent No. 6,509,926 discloses a video surveillance system which obscures portions of captured video images for privacy purposes. Unfortunately, the obscured portions relate to fixed zones in a scene and are thus ineffective to protect the privacy of persons or objects which appear outside of the fixed zone. In addition, the obscured portions of the images can not be reconstructed in the video surveillance system disclosed in the '926 patent. Thus, there is need for a video surveillance system that not only can recognize regions of interest in a video scene, such as human faces, but at the same time preserves the privacy of the persons or other objects, such as license plate numbers, by scrambling portions of the captured video content and also allow the scrambled video content to be selectively unscrambled.

SUMMARY OF THE INVENTION

Briefly, the present invention relates to a video surveillance system which addresses the issue of privacy rights and scrambles regions of interest in a video scene to protect the privacy of human faces and objects captured by the system. The video surveillance system is configured to identify persons and or objects captured in a region of interest by various techniques, such as detecting changes in a scene or by face detection. The regions of interest are automatically scrambled, for example, by way of a private encryption key, while the balance of the video scene is left in tact and is thus recognizable. By scrambling a region of interest, drawbacks of known code block scrambling techniques are avoided. The entire video scenes are also compressed by one or more compression standards, such as JPEG 2000. In accordance with one aspect of the invention, the degree of scrambling can be controlled.

In the following, embodiments of the invention are summed up in a concise way:

    1. A smart video surveillance system comprising:

        at least one video surveillance system including a video surveillance camera system for capturing video scenes defining captured video scenes and a server for storing and processing said captured video scenes; the video surveillance system configured to capture, analyze said captured video scenes and identify regions of interest within said video scenes, and scramble said regions of interest within said captured video scenes in a manner in which only the region of interest is scrambled and which allows said video scenes including the scrambled content to be played back by way of a standard decoder.

2. The smart video surveillance system as recited in embodiment 1,
wherein said video surveillance system is further configured to enable the degree to which the regions of interest are scrambled is user selectable.

3. The smart video surveillance system as recited in embodiment 1 or 2,
wherein said video surveillance system is configured to automatically detect scene changes.

4. The smart video surveillance system as recited in anyone of embodiments 1 to 3,
wherein said video surveillance system is configured to automatically detect human faces.

5. The smart video surveillance system as recited in anyone of embodiments 1 to 4,
wherein said video surveillance system includes a system for compressing said captured video scenes.

6. The smart video surveillance system as recited in anyone of embodiments 1 to 5,
wherein said video surveillance system is configured to scramble said region of interest using standard region of interest (ROI) coding techniques.

7. The smart video surveillance system as recited in embodiment 1,
wherein said standard coding technique is JPEG 2000.

8. The smart video surveillance system as recited in embodiment 7,
wherein said video surveillance system is configured to scramble using a predetermined code block size.

9. The smart video surveillance system as recited in embodiment 8,
wherein said predetermined code block size is 8 x 8.

10. The smart video surveillance system as recited in embodiment 8,
wherein said predetermined code block size is 16 x 16.

11. The smart video surveillance system as recited in embodiment 8,
wherein said predetermined code block size is 32 x 32.

12. The smart video surveillance system as recited in embodiment 7,
wherein said video surveillance system is configured to scramble using a predetermined user selectable scrambling co-efficient.

13. The smart video surveillance system as recited in embodiment 7,
wherein said video surveillance system is configured to scramble using an explicit approach for region of interest encoding.

14. The smart video surveillance system as recited in embodiment 13,
wherein said explicit approach for region of interest encoding causes a pseudo random noise sequence to be added to the code stream corresponding to the regions of interest such that said regions of interest can only be unscrambled by authorized users which have said pseudo random noise sequence.

15. The smart video surveillance system as recited in embodiment 7,
wherein said video surveillance system is configured to scramble using an implicit approach for region of interest encoding.

DESCRIPTION OF THE DRAWING

These and other advantages of the present invention will be readily understood with reference to the following description and attached drawing, wherein:
Fig. 1 is high level diagram of an exemplary architecture for a video surveillance system in accordance with the present invention.
Fig. 2 is a simplified flow chart for the system in accordance with the present invention.
Fig. 3 is an exemplary diagram illustrating exemplary co-efficient values for the background scene in contrast with the region of interest in accordance with the present invention.
Fig. 4 is an exemplary block diagram illustrating a wavelet domain scrambling technique in accordance with the present invention.
Fig. 5 is an exemplary block diagram illustrating an unscrambling technique in accordance with the present invention.
Figs. 6A and 6B are diagram of an exemplary scene and a corresponding segmentation for the scene.
Figs. 7A, 7B and 7C illustrate the scene, shown in Fig. 6A with varying amounts of distortion applied to the persons, shown in Fig. 6A.
Figs. 8A, 8B and 8C are similar to Figs. 7A-7C but further including a low quality background.
Figs. 9A, 9B and 9C illustrate various levels of scrambling of the scene illustrate in Fig. 6A on a code block basis.
Figs. 9D, 9E and 9F illustrate various levels of scrambling of the scene illustrate in Fig. 6A on a region of interest basis in accordance with the present invention.
Figs. 10A and 10B illustrate various degrees of heavy scrambling of the scene illustrate in Fig. 6A utilizing the region of interest technique in accordance with the present invention. <
Figs. 11A and 11B are similar to Figs. 10A and 10B but illustrating various degrees of light scrambling.

DETAILED DESCRIPTION

The present invention relates to a video surveillance system which addresses the issue of privacy rights and scrambles regions of interest in a video scene to protect the privacy of human faces and objects captured by the system. The video surveillance system is configured to identify persons and or objects captured in a region of interest in a video scene by various techniques, such as detecting changes in a scene or by face detection, hi accordance with an important aspect of the invention regions of interest within a video scene are automatically scrambled, for example, by way of a private encryption key, while the balance of the video scene is left in tact and is thus recognizable. By scrambling regions of interest, various drawbacks of known code block scrambling techniques are avoided. The entire video scenes are also compressed by one or more compression standards, such as JPEG 2000. In accordance with one aspect of the invention, the degree of scrambling can be controlled.

OVERALL SYSTEM

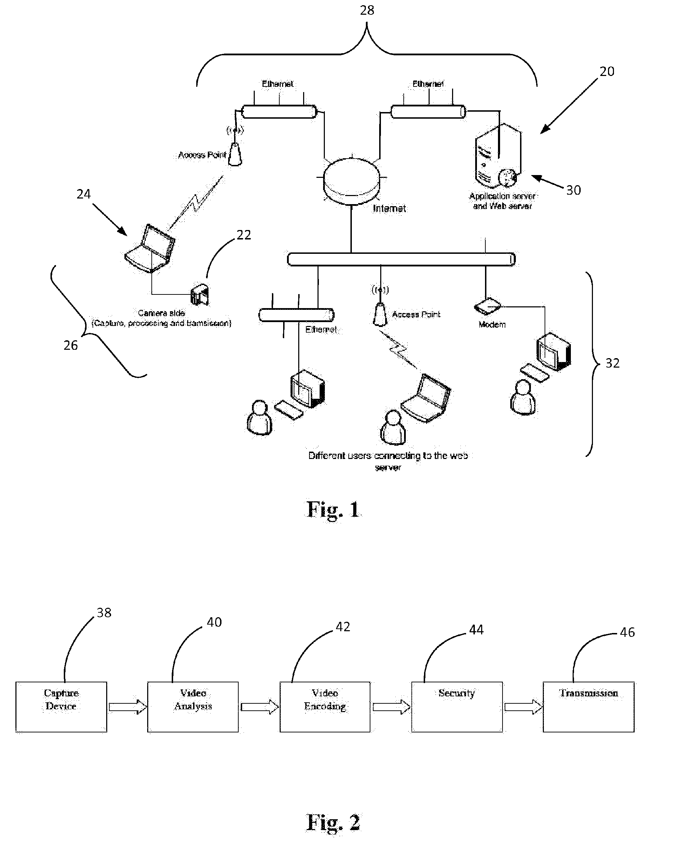

Referring to Fig. 1, a high level diagram of the video surveillance system in accordance with the present invention is illustrated and identified with the reference numeral 20. The video surveillance system 20 includes at least one surveillance camera 22 and a computer 24, collectively a video surveillance camera system 26 or a so-called camera server, as discussed below. Each video surveillance camera system 26 may be either powered by electrical cable, or have its own autonomous energy supply, such as a battery or a combination of batteries and solar energy sources. The video surveillance camera system 26 may be coupled to a wired or wireless network, for example, as generally shown in Fig. 1 and identified with the reference numeral 28, which includes an application server 30 which may also be configured as a web server. Wireless networks, such as WiFi networks facilitate deployment and relocation of surveillance cameras to accommodate changing or evolving surveillance needs.

Each video surveillance camera system 26 processes the captured video sequence in order to analyze, encode and secure it. In particular, Each video surveillance camera system 26 processes the captured video sequence in order to identify human faces or other objects of interest in a scene and encodes the video content using a standard video compression technique, such as JPEG-2000. The resulting code-stream is then transmitted over the network 28, for example, an Internet Protocol (IP) network to the application server 30.

The application server 30 stores the code-streams received from the various video surveillance camera systems 26, along with corresponding metadata information from the video analysis (e.g. events detection). Based on this metadata information, the application server 30 can optionally trigger alarms and archive the video sequences corresponding to events.

The application server 30, for example, a desktop PC running conventional web server software, such as the Apache HTTP server from the Apache Software Foundation or the Internet Information Services (IIS) from Microsoft, stores the data received from the various video surveillance camera systems 26, along with corresponding optional metadata information from the video analysis (e.g. events detection). Based on this metadata information, the application server 30 may trigger alarms and archive the sequences corresponding to events. The application server 30 can optionally store the transmitted video and associated metadata, either continuously or when special events occur.

Heterogeneous clients 32 can access the application server 30, in order to monitor the live or archived video surveillance sequences. As the code-stream is scalable, the application server 30 can adapt the resolution and bandwidth of the delivered video content depending on the performance and characteristics of the client and its network connection by way of a wired or wireless network so that mobile clients can access the system. For instance, policemen or security guards can be equipped with laptops or PDAs while on patrol. The system can also be configured so that home owners, or others, are automatically an SMS or MMS messages in the event an abnormal condition, such as an intrusion is detected. An example of such a system is disclosed in US Patent No. 6, 698,021, hereby incorporated by reference.

In accordance with an important aspect of the invention, regions of interest of a video scene corresponding to human faces or other objects of interest are scrambled before transmission in order to preserve privacy rights. The encoded data may be further encrypted prior to transmission over the network for security. In accordance with another important aspect of the invention, the scrambled portions of the video content may be selectively unscrambled to enable persons or objects to be identified.

VIDEO SURVEILLANCE CAMERA SYSTEM

A simplified flow chart for a video surveillance camera system 26 for use with the present invention is illustrated in Fig. 2. Video content is acquired in step 38 by a capture device, such as a video surveillance camera system 26, which includes a camera 22 and a PC 24, as discussed below. The camera may be connected to the PC 24 by way of a USB port. The PC may be coupled in a wired or wireless network, such as a WiFi (also known as IEEE 802.11) network.

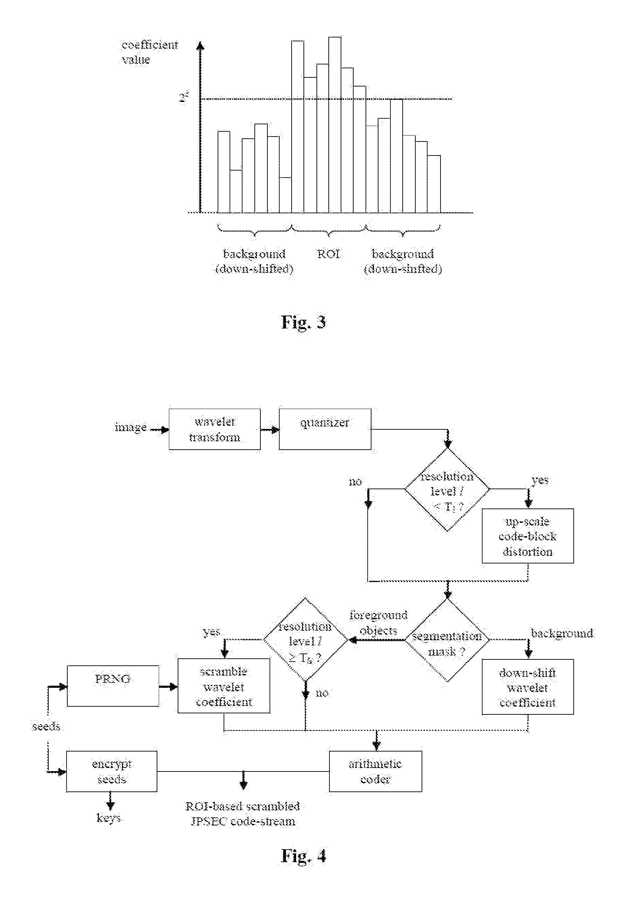

The camera 22 may be a conventional web cam, for example a QuickCam Pro 4000, as manufactured by Logitech. The PC may be a standard laptop PC 24 with a 2.4 GHz Pentium processor. Such conventional web cams come with standard software for capturing and storing video content on a frame by frame basis. The camera 22 may provide an analog or digital output signal. Analog output signals are digitized by the 24 in a known manner. All of the video content processing of the video content, described below in steps 40-46, can be performed by the PC 24 at about 25 frames per second when capturing video data in step 38 and processing video with a resolution of 320 X 240. As illustrated and discussed below in connection with Figs. 3-5, video captured with a 320 X 240 spatial resolution may be encoded with three layers of wavelet decomposition and code-blocks of 16 X 16 pixels.

Alternatively, the smart surveillance camera can be a camera server which includes a stand-alone video camera with an integrated CPU that is configured to be wired or wirelessly connected to a private or public network, such as, TCP/IP, SMTP E-mail and HTTP Web Browser networks for transmitting live video images. An exemplary camera server is a Hawking Model No. HNC320W/NC300 camera server.

The video content is analyzed in step 40 to detect the occurrence of events in the scene (e.g. intrusion, presence of people). The goal of the analysis is to detect events in the scene and to identify regions of interest. The information about the objects in the scene is then passed on in order to encode the object with better quality or to scramble it, or both. As mentioned above, relying on a human operator monitoring control screens in order to set off an alarm is notoriously inefficient. Therefore, another purpose of the analysis may be to either bring to the attention of the human operator abnormal behaviors or events, or to automatically trigger alarms.

The video content may then be encoded using a standard compression technique, such as JPEG 2000, in step 42 as described in more detail below. The encoded data may be further scrambled or encrypted in step 44 in order to prevent snooping, and digitally signing it for source authentication and data integrity verification. In addition, regions of interest can be coded with a superior quality when compared to the rest of the scene. For example, regions of interest can be encoded with higher quality, or scrambled while leaving the remaining data in a scene unaltered. Finally, the codestream is packetized in step 46 in accordance with a transmission protocol, as discussed below, for transmission to the application server 30. At this stage, redundancy data can optionally be added to the codestream in order to make it more robust to transmission errors.

Various metadata, for example data about location and time, as well as about the region in the scene where a suspicious event, intrusion or person has been detected, gathered from the scene as a result of the analysis can also be transmitted to application server 30. hi general, metadata relates to information about a video frame and may include simple textual/numerical information, for example, the location of the camera and date/time, as mentioned above, or may include some more advanced information, such as the bounding box of the region where an event or intrusion has been detected by the video analysis module, or the bounding box where a face has been detected. The metadata may even be derived from the face recognition, and therefore could include the name of the recognized persons (e.g. John Smith has entered the security room at time/date).

Metadata is generated as a result of the video analysis in step 40 and may be represented in XML using MPEG-7, for example, and transmitted in step 46 separately from the video only when a suspicious event is detected. As it usually corresponds to a very low bit rate, it may be transmitted separately from the video, for instance using TCP-IP. Whenever a metadata message is received, it may be used to trigger an alarm on the monitor of the guard on duty in the control room (e.g. ring, blinking, etc...) or be used to generate a text message and sent to a PDA, cell phone, or laptop computer.

Since the above processes are performed in the video surveillance camera system 26, it is paramount to keep the energy consumption low, while obtaining the highest quality of coded video. As discussed in more detail below, this goal is achieved by an optimization process which aims at finding the best compromise between the following two parameters: power consumption and perceived decoded video. This is as opposed to the conventional approach of optimization based on bit rate versus Peak-Signal-to-Noise-Ratio (PSNR) or Mean Square Error (MSE) as parameters.

Scene Change Detection

Various techniques are known for detecting a change in a video scene. Virtually all such techniques can be used with the present invention. However, in accordance with an important aspect of the invention, the system assumes that all cameras remain static. In other words, the cameras do not move and are continuously in a static position thereby continuously monitoring the same scene. In order to reduce the complexity of the video analysis in step 40, a simple frame difference algorithm may be used. As such, the background is initially captured and stored, for example as illustrated in Fig. 3. Regions corresponding to changes are merely obtained by taking the pixel by pixel difference between the current video frame and the stored background, and by applying a threshold. For example, the change detection may be determined by simply taking the difference between the current frame and a reference background frame and determining if the difference is greater than a threshold. For each pixel x, a difference $D_n(x) = I_n(x) - B(x)$ is calculated, where $I_n(x)$ is the n-th image and $B(x)$ is the stored background.

A change mask $M(x)$ may be generated according to the following decision rule:

$$M(x) = 1 \qquad \text{if } |D_n(x)| > T$$
$$0 \text{ Otherwise}$$

where T is the threshold and $M(x)$ is the pixel in the image being analyzed.

The threshold may be selected based on the level of illumination of the scene and the automatic gain control and white balance in the camera. The automatic gain control relates to the gain of the sensor while the white balance relates to the definition of white. As the lighting conditions change, the camera may automatically change these settings, which may affect the appearance of the captured images (e.g. they may be lighter or darker), hence adversely affecting the change detection technique. To remedy this, threshold may be adjusted upwardly or downwardly for the desired contrast.

In order to take into account changes of illumination from scene to scene, the background may be periodically updated. For instance, the background can be updated as a linear combination of the current frame and the previously stored background as set forth below

$$B_n = \alpha I_n + (1-\alpha)B_{n-1}$$

if n=iF with i = 1, 2 (F is the period of the update)
$B_n = B_{n-1}$ otherwise
Where $B_n$ = the current background
$B_{n-1}$ = the previous background
$I_n$ = the current frame
$\alpha$ = a constant

In order to smooth and to clean up the resulting change detection mask, a morphological filter may be applied. Morphological filters are known in the art and are described in detail in : Salembier et al, "Flat Zones Filtering Connected Operators and Filters by Reconstruction", IEEE Transactions on Image Processing, Vol. 4, No. 8, Aug. 1995, pages 1153-1160, hereby incorporated by reference. In general, morphological filters can be used to clean-up a segmentation mask by removing small segmented regions and by removing small holes in the segmented regions. Morphological operations modify the pixels in an image depending on the neighboring pixels and Boolean operations by performing logical operations on each pixel.

Two basic morphological operations are dilation and erosion. Most morphological operations are based on these two operations. Dilation is the operation which gradually enlarges the boundaries of regions in other words allows objects to expand, thus potentially filling in small holes and connecting disjoint objects. Erosion operation erodes the boundaries of regions. It allows objects to shrink while the holes within them become larger. The opening operation is the succession of two basic operations, erosion followed by dilation. When applied to a binary image, larger structures remain mostly intact, while small structures like lines or points are eliminated. It eliminates small regions, smaller than the structural element and smoothes regions' boundaries. The closing operation is the succession of two basic operations, dilation followed by erosion. When applied to a binary image, larger structures remain mostly intact, while small gaps between adjacent regions and holes smaller than the structural element are closed, and the regions' boundaries are smoothed.

Face Detection

The detection of the presence of people in the scene is one of the most relevant bits of information a video surveillance system can convey. Virtually any of the detection systems described above can be used to detect objects, such as cars, people, license plates, etc. The system in accordance with the present invention may use a face detection technique based on a fast and efficient machine learning technique for object detection, for example, available from the Open Computer Vision Library, available at http://www.Sourceforge.net/projects/ opencvlibrary , described in detail in Viola et al, "Rapid Object Detection Using a Boosted Cascade of Simple Features, IEEE Proceedings CVPR. Hawaii, Dec. 2001, pages 511-518 and Lienhart et al "Empirical Analysis of Detection Cascades of Boosted Classifiers for Rapid Object Detection"; MRL Technical Reports, Intel Labs, 2002.

The face detection is based on salient face feature extraction and uses a learning algorithm, leading to efficient classifiers. These classifiers are combined in cascade and used to discard background regions, hence reducing the amount of power consumption and computational complexity.

Video Encoding

The captured video sequence may be encoded in step 42 using standardized video compression techniques, such as JPEG 2000 or other coding schemes, such as scalable video coding offering similar features. The JPEG 2000 standard is well-suited for video surveillance applications for a number of reasons. First, even though it leads to inferior coding performance compared to an inter-frame coding schemes, intra-frame coding allows for easy browsing and random access in the encoded video sequence, requires lower complexity in the encoder, and is more robust to transmission errors in an error-prone network environment. Moreover, the JPEG 2000 standard intra- frame coding outperforms previous intra-frame coding schemes, such as JPEG, and achieves a sufficient quality for a video surveillance system. The JPEG 2000 standard also supports regions of interest coding, which is very useful in surveillance applications. Indeed, in video surveillance, foreground objects can be very important, while the background is nearly irrelevant. As such, the regions detected during video analysis in step 40 (Fig. 2) can be encoded with high quality, while the remainder of the scene can be coded with low quality. For instance, the face of a suspect can be encoded with high quality, hence enabling its identification, even though the video sequence is highly compressed.

Seamless scalability is another very important feature of the JPEG 2000 standard. Since the JPEG-200 compression technique is based on a wavelet transform generating a multi-resolution representation, spatial scalability is immediate. As the video sequence is coded in intra-frame, namely each individual frame is independently coded using the JPEG 2000 standard, temporal scalability is also straightforward. Finally, the JPEG 2000 codestream can be build with several quality layers optimized for various bit rates. In addition, this functionality is obtained with negligible penalty cost in terms of coding efficiency. The resulting codestream then supports efficient quality scalability. This property of seamless and efficient spatial, temporal and quality scalability is essential when clients with different performance and characteristics have to access the video surveillance system.

Techniques for encoding digital video content in various compression formats including JPEG 2000 is extremely well known in the art. An example of such a compression technique is disclosed in: Skodras et al; "The JPEG 2000 Still Image Compression Standard"; IEEE Signal Processing Magazine; volume 18, Sept. 2001, pages 36-58, hereby incorporated by reference. The encoding is performed by the smart surveillance cameras 22, 24 and 26 (Fig. 1) as discussed above. As illustrated in Fig. 2, video encoding is done in step 42 .

Security

Secured JPEG 2000 (JPSEC), for example, as disclosed in Dufaux et al; "JPSEC for Secure Imaging in JPEG 2000"; Journal of SPIE Proceedings -Applications of Digital Image Processing XXVII, Denver, Colorado, November 2004, pages 319-330, hereby incorporated by reference, may be used to secure the video codestream in step 44. The JPSEC standard extends the baseline JPEG 2000 specifications to provide a standardized framework for secure imaging, which enables the use of security tools such as content protection, data integrity check, authentication, and conditional access control.

Transmission

A significant part of the cost associated with a video surveillance system is in the deployment and wiring of cameras. In addition, it is often desirable to install a surveillance system in a location for a limited time, for instance during a manifestation or a special event. The attractiveness of a wireless network connecting the smart cameras appears therefore very clearly. It enables very easy, flexible and cost effective deployment of cameras wherever wireless network coverage exists.

However, wireless networks are subject to frequent transmission errors. Li order to solve this problem, wireless imaging solutions have been developed which are robust to transmission errors. In particular, Wireless JPEG 2000 or JPWL has been developed as an extension of the baseline JPEG 2000 specification, as described in detail in Dufaux et al; "JPWL: JPEG 2000 for Wireless Applications"; Journal of SPJJE Proceedings-Applications of Digital Image Processing XXVII" Denver, Colorado, November 2004, pages 309-318, hereby incorporated by reference. It defines additional mechanisms to achieve the efficient transmission of JPEG 2000 content over an error-prone network. It is shown that JPWL tools result in very significant video quality improvement in the presence of errors. In the video surveillance system in accordance with the present invention, JPWL tools may be used in order to make the codestream more robust to transmission errors and to improve the overall quality of the system in presence of error-prone transmission networks.

JPSEC is used in the video surveillance system in accordance with the present invention as a tool for conditional access control. For example, pseudo-random noise can be added to selected parts of the codestream to scramble or obscure persons and objects of interest. Authorized users provided with the pseudo-random sequence can therefore remove this noise. Conversely, unauthorized users will not know how to remove this noise and consequently will only have access to a distorted image. The data to remove the noise may be communicated to authorized users by means of a key or password which describes the parameters of to generate the noise, or to reverse the scrambling and selective encryption applied.

SCRAMBLING

An important aspect of the system in accordance with the present invention is that it may use a conditional access control technique to preserve privacy. With such conditional access control, the distortion level introduced in specific parts of the video image can be controlled. This allows for access control by resolution, quality or regions of interest in an image. Specifically, it allows for portions of the video content in a frame to be scrambled. In addition, several levels of access can be defined by using different encryption keys. For example, people and/or objects in a scene that are detected may be scrambled without scrambling the background scene. In known systems, for example, as discussed in Dufaux et al; "JPSEC for Secure Imaging in JPEG 2000"; hereby incorporated by reference, scrambling is selectively applied only to the code-blocks corresponding to the regions of interest. Furthermore, the amount of distortion in the protected image can be controlled by applying the scrambling to some resolution levels or quality layers. In this way, people and/or objects, such as cars, under surveillance cannot be recognized, but the remaining of the scene is clear. The encryption key can be kept under tight control for the protection of the person or persons in the scene but available to selectively enable unscrambling to enable objects and persons to be identified.

However, there are certain drawbacks with such a technique. In particular, the shape of the scrambled region is restricted to match code-block boundaries.

Although such a technique is effective in the case of simple geometry with large rectangular regions, it is a severe drawback in the case of more complex geometry with small arbitrary-shape regions. Moreover, a small code-block size is very detrimental to both the coding performance and the computational complexity of JPEG 2000.

EFFICIENT SCRAMBLING TECHNIQUE

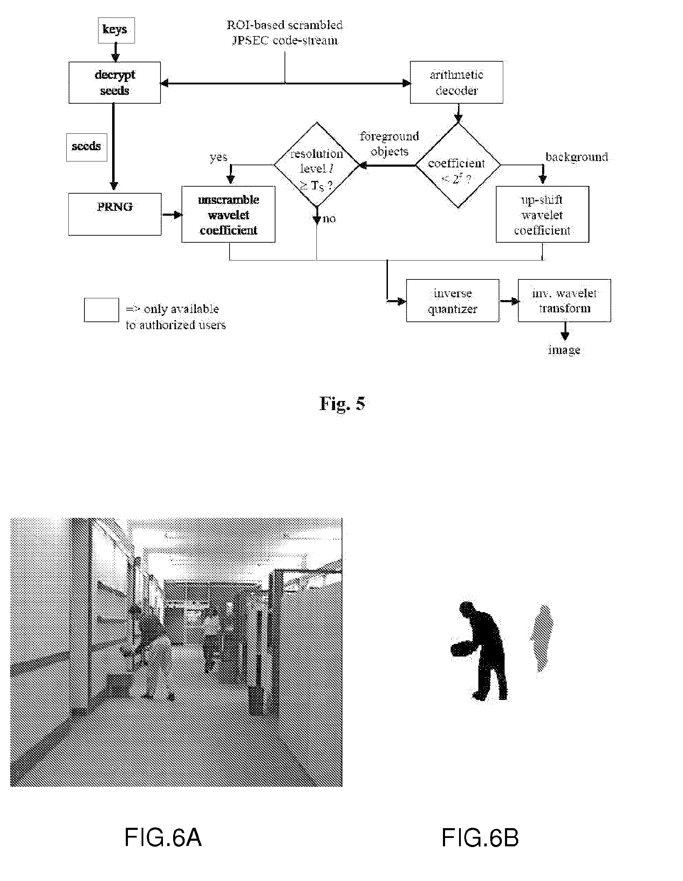

In accordance with the present invention, an efficient scrambling technique, based on the region of interest, is used which overcomes the disadvantages of code block based techniques, when scrambling small arbitrary-shape regions. The discussion below is based upon an exemplary video sequence or an image, for example, as illustrated in Fig. 6A and an associated segmentation mask, for example, as illustrated in Fig. 6B, which has been extracted either manually or automatically. The example also assumes that the foreground objects outlined by the mask contain private information that need to be scrambled, hi accordance with an important aspect of the invention, each pixel is transformed into a wavelet co-efficient. For example, for an image which has W x H pixels (typically 320 x 240 for a standard web cam). The region of interest (ROI) within the image is coded using ROI coding, for example, as set forth in the JPEG 2000 standard, hereby incorporated by reference used to scramble regions of interest in a video scene by way of a private encryption key. The backgrounds in video scenes are also coded in accordance with the JPEG 2000 standard, for example; however, the wavelet co-efficients are processed differently, as discussed below.. As such, a standard JPEG 2000 decoder can be used todisplay the video scene with the region of interest scrambled. Two types of JPEG 2000 ROI coding techniques are used for scrambling the region of interest in a video scene; max-shift and implicit, as discussed below.

EXPLICIT REGION OF INTEREST SCRAMBLING (MAX-SHIFT)

In accordance with the present invention, a max-shift method is an explicit approach for region of interest (ROI) coding in JPEG 2000. As described in detail in the JPEG 2000 standard, a wavelet transformation is performed in order to obtain the wavelet coefficients. Each wavelet co-efficient corresponds to a location in the image domain. In particular, as discussed above, a region of interest is determined by detecting faces or changes in a scene in order to come up with a segmentation mask, for example, as illustrated in Fig. 6B. The segmentation mask is in the image domain and for each pixel specifies whether it is in the region of interest (i.e. foreground) or the background. Fig. 3 illustrates this approach. More precisely, an ROI mask is specified in the wavelet domain, as discussed above. At the encoder side, a scale factor 2s is determined to be larger than the magnitude of any background wavelet coefficients. All coefficients belonging to the background are then scaled down by this factor, which is equivalent to shifting them down by s bits. As a result, all non-zero ROI coefficients are guaranteed to be larger than the largest background coefficient. All the wavelet coefficients are then entropy coded and the value s is also included in the code-stream. At the decoder side, the wavelet coefficients are entropy decoded, and those with a value smaller than 2s are shifted up by s bits. The max-shift method is therefore an efficient way to convey the shape of the foreground regions without having to actually transmit additional shape information. Note also that this method supports multiple arbitrary-shape ROIs. Another consequence of this method is that coefficients corresponding to ROI are prioritized in the code-stream so that they are received before the background at the decoder side. A drawback of the approach is that the transmission of any background information is delayed, resulting in a sometimes undesirable all- or-nothing behavior at low bit rates.

IMPLICIT REGION QF INTEREST SCRAMBLING

Another approach for ROI coding is implicit ROI scrambling. The JPEG 2000 code- stream is composed of a number of quality layers, with each layer including a contribution from each code-block. This contribution is usually determined during rate control based on the distortion estimates associated with each code-block. An ROI can therefore be implicitly defined by up-scaling the distortion estimate of the code-blocks corresponding to this region. As a result, a larger contribution will be included from these respective code-blocks. Note that, in this approach, the code-stream does not contain explicit ROI information. The decoder merely decodes the code-stream and is not even aware that a ROI has been used. One disadvantage of this approach is that the ROI is defined on a code-block basis.

An exemplary block diagram illustrating the encoding and scrambling process for ROI scrambling is shown in Fig. 4. Basically, the technique adds a pseudo-random noise in parts of the code-stream corresponding to the regions to be scrambled. Authorized users who know the pseudo-random sequence can easily remove the noise. On the contrary, unauthorized users do not know how to remove this noise and have only access to a distorted image.

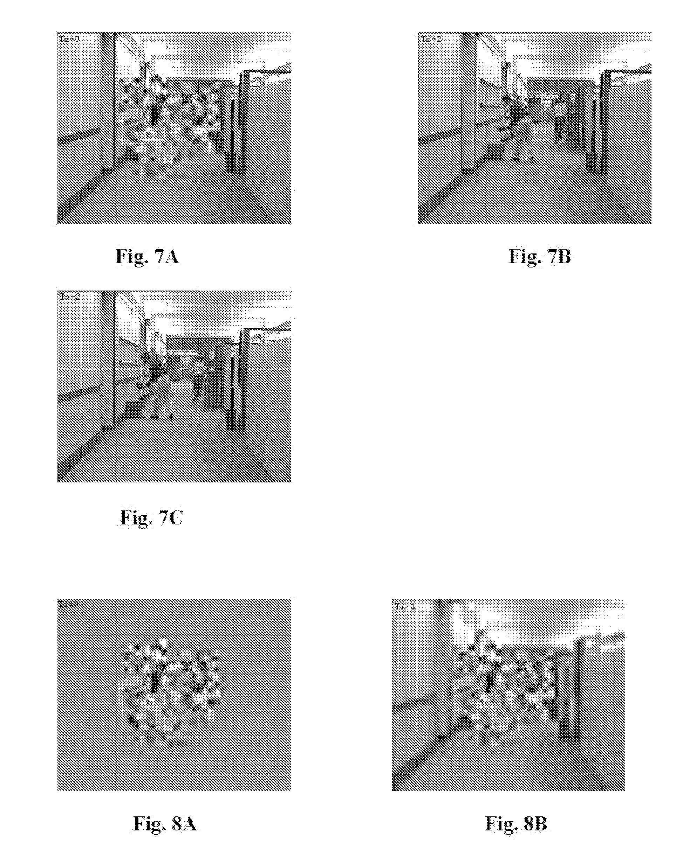

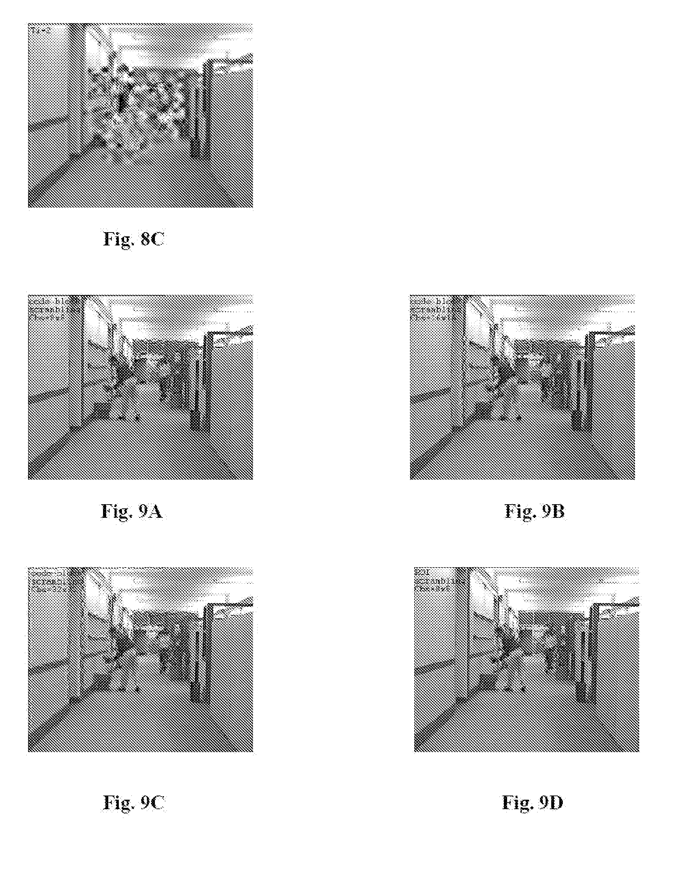

In order for the decoder side to receive a low resolution version of the background without delay, the implicit ROI method is used to prioritize all the code-blocks from lower resolution levels. In particular, the purpose of this stage is to circumvent the all-or-nothing behavior characteristic of the max-shift method. For this purpose, a threshold T1 (with T1 = 0, 1, 2, ...) is defined so that code-blocks belonging to the resolution level $l$ are incorporated in the ROI if $l < T_i$. This is achieved by up-scaling the distortion estimate for these code-blocks. The $T_i$ and a $T_s$ are thresholds which can be adjusted. The threshold $T_s$ controls the strength of the scrambling, for example, as illustrated in Figs. 7A, 7B and 7C. The threshold Ti controls the quality of the background, for example, as illustrated in Figs. 8A, 8B and 8C.

The segmentation mask, as discussed above, is then used to classify wavelet coefficients to the background or foreground. Also, a second threshold Ts (with Ts = 0, 1, 2, ...) is defined in order to control the strength of the scrambling. At this stage, the max-shift ROI method is used to convey the background/foreground segmentation information. Accordingly, coefficients belonging to the background are downshifted by s bits, where s is determined so that the scale factor 2s is larger than the magnitude of any background wavelet coefficients. Conversely, coefficients corresponding to the foreground and belonging to resolution level / are scrambled if I ≥ Ts. Remaining foreground coefficients are unchanged.

The scrambling relies on a pseudo-random number generator (PRNG) driven by a seed value. For the sake of simplicity and low complexity, the scrambling consists in pseudo- randomly inverting the sign of selected coefficients. Note that this method modifies only the most significant bit-plane of the coefficients. Hence, it does not change the magnitude of the coefficients, therefore preserving the max-shift ROI information. The sign flipping takes place as follows. For each coefficient, a new pseudo-random value is generated and compared with a density threshold. If the pseudo-random value is greater than the threshold, the sign is inverted; otherwise the sign is unchanged.

In an exemplary, a SHA1PRNG algorithm with a 64-bit seed is used for PRNG. The SHA1PRNG algorithm is discussed in detail in http://java.sun.eom/i2se/1.4.2/docs/guide/securitv/CrvptoSpec.html, Java Cryptography Architecture API Specification and reference, hereby incorporated by reference. In order to improve the security of the system, the seed can be frequently changed. To communicate the seed values to authorized users, they are encrypted and inserted in the codestream. In an exemplary implementation, an RSA algorithm, for example, as disclosed in R.L. Rivest, A. Shamir, and L.M. Adleman, "A method for obtaining digital signatures and public-key cryptosystems", Communications of the ACM (2) 21, 1978, Page(s): 120-126, hereby incorporated by reference, is used for encryption. The length of the key can be selected at the time the image is protected. Note that other PRNG or encryption algorithms could be used as well. As such, the resulting codestream is compliant with JPSEC (JPEG 2000 Part 8 (JPSEC) FCD, ISO/EEC JTC1/SC29 WGI N3480, November 2004).. In particular, the syntax to signal how the scrambling has been applied is similar to the one in JPSEC standard, for example, as discussed in detail in F. Dufaux, S. Wee, J. Apostolopoulos and T. Ebrahimi, "JPSEC for secure imaging in JPEG 2000", in SPIE Proc. Applications of Digital Image Processing XXVII, Denver, CO, Aug. 2004, hereby incorporated by reference.

At the decoder side, the following operations are carried out as illustrated in Fig.5. The decoder receives the ROI-based scrambled JPSEC code-stream, including the value s used for max-shift, the encrypted seeds for PRNG and the threshold Ts. The wavelet coefficients are first entropy decoded. The coefficients with a value smaller than 2s are classified as background. As they have not been scrambled, it is sufficient to simply shift them up by 5 bits in order to recover their correct values. The remaining coefficients correspond to the foreground and those belonging to resolution level I ≥ Ts are scrambled. On the one hand, unauthorized users do not have possession of the keys. Therefore, they cannot decrypt the seeds nor reproduce the sequence of pseudo-random numbers and per consequent are unable to unscramble these coefficients. To them, the decoded image will appear distorted. On the other hand, authorized users can reproduce the same sequence of pseudo-random numbers as used during encoding. They are therefore able to unscramble these coefficients and to see the unprotected image. Note that the use of the implicit ROI to prioritize code-blocks corresponding to the background and belonging to low resolution levels is transparent to the decoder.

COMPARISON WITH OTHER SCRAMBLING TECHNIQUES

The ROI-based scrambling technique in accordance with the present invention compares favorably to other scrambling techniques. As discussed below, a hall monitor video sequence in CIF format is illustrated in Fig.6A along with a ground-truth segmentation mask, as shown in Fig. 6B.

Figs. 7A, 7B and 7C illustrate the scrambling results when the amount of distortion Ts is varied, for example, for Ts= 0, 1, 2 (Ts=0 and rate = 4bbp). More specifically, with a high degree scrambling (Ts = 0), for example, as illustrated in Fig. 7A, the foreground is replaced by noise, whereas with a medium or light scrambling (Ts = 1 or 2), for example, as illustrated in Figs. 7B and 7C, the people in the scene are still visible but are too fuzzy to be recognizable.

Figs 8A-8C illustrate the importance of simultaneously considering both the explicit (max-shift) and implicit ROI mechanisms in the scrambling technique in accordance with the present invention. When using solely the max-shift method (T1 = 0), the foreground objects are completely transmitted before the decoder receives background information. At low bit rate, this results in an all-or-nothing behavior which is in most cases undesirable, for example, as illustrated in Fig. 8A, when the foreground is scrambled. By allowing for implicit ROI scrambling (T1 = 1 or 2), all of he code-blocks from the lower resolution levels (level 0 for T1 = 1, levels 0 and 1 for T1 = 2) are included in the ROI even though the ones belonging to the background are not scrambled, as illustrated in Figs. 8B and 8C. Consequently, a low resolution version of the background is received without delay.

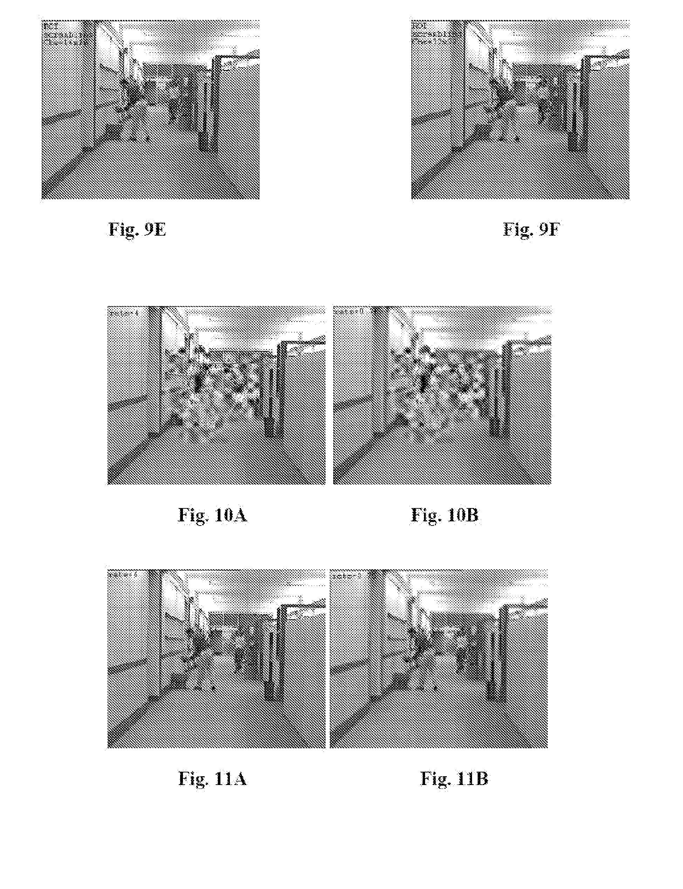

Figs 9A-9F illustrate ROI-based scrambling with the techniques disclosed in F. Dufaux, and T. Ebrahimi, "Video Surveillance using JPEG 2000", in SPIE Proc. Applications of Digital Image Processing XXVII, Denver, CO, Aug. 2004 and F. Dufaux, S. Wee, J. Apostolopoulos and T. Ebrahimi, "JPSEC for secure imaging in JPEG 2000", in SPIE Proc. Applications of Digital Image Processing XXVII, Denver, CO, Aug. 2004, performing scrambling on a code- block basis. The code block scrambling technique is illustrated in Figs. 9A-9C. The scrambling technique in accordance with the present invention is illustrated in Figs. 9D-9F, which illustrate scrambling with code-block sizes of 8 x 8, 16 x 16 and 32 x 32, respectively with distortion coefficients T1 = 1 and Ts = 2 at a rate = 4 bbp. In the code block scrambling example, illustrated in Figs. 9A-9C, the shape of the scrambled region is restricted to match code-block boundaries. This becomes a significant drawback in the case of small arbitrary-shape regions as can be observed. Indeed, with 32x32 code-blocks, the scrambled region is significantly larger than the foreground mask. This drawback is slightly alleviated with smaller 16x16 or 8x8 code-blocks. However, the use of smaller code-block size is detrimental to both coding performance and computational complexity. In contrast, with the proposed ROI-based scrambling technique, the scrambled region matches fairly well the foreground mask, independently from the code-block size.

Based on the above, a distortion co-efficient of T1 = 2 is a suitable threshold to include low resolution background information in the ROI scrambling technique in accordance with the present invention, whereas a distortion co-efficient Ts = 0 leads to heavy scrambling, and a distortion co-efficient Ts = 2 is suitable for light scrambling. Heavy and light scrambling results at high and low bit rates is illustrated in Figs 10A-10B and Figs 11A and 11B. In particular Figs 10A and 10B illustrate heavy scrambling at a rate of 4 bbp or 0.75 bpp, respectively, for distortion coefficients of T1 = 2 and Ts = 0. Figs 11A and 11B illustrate light scrambling at a rate of 4 bbp or 0.75 bpp, respectively, for distortion co-efficients of T1 = 2 and Ts = 2.

Obviously, many modifications and variations of the present invention are possible in light of the above teachings. Thus, it is to be understood that, within the scope of the appended claims, the invention may be practiced otherwise than is specifically described above.

What is claimed and desired to be secured by a Letters Patent of the United States is:

## Claims

1. A smart video surveillance system comprising:

   at least one video surveillance system including a video surveillance camera system for capturing video signals representing video scenes and coding said video signals in accordance with a predetermined video format defining coded video signals and a server for storing and processing said coded video signals; the video surveillance system configured to capture and analyze said video signals and identify regions of interest within said video scenes by specifying for each pixel whether it is in the regions of interest or in the background, and scramble said regions of interest within said captured video scenes using the JPEG 2000 max-shift method for region of interest coding in order to scramble only the pixels of the regions of interest, said video signals representing said video scenes including the scrambled content to be decoded and played back by way of a decoder configured to decode said video signals in said predetermined video format without descrambling the pixels of said regions of interest,

   wherein said video surveillance system is configured to scramble using a JPEG 2000 implicit approach for region of interest encoding, in order to include in the region of interest all the code-blocks from resolution levels being lower than a chosen threshold.

2. The smart video surveillance system as recited in claim 1,
   wherein said video surveillance system is further configured to enable the degree to which the regions of interest are scrambled is user selectable.

3. The smart video surveillance system as recited in claims 1 or 2,
   wherein said explicit approach for region of interest encoding causes a pseudo random noise sequence to be added to the code stream corresponding to the regions of interest such that said regions of interest can only be unscrambled by authorized users which have said pseudo random noise sequence.

4. The smart video surveillance system as recited in anyone of claims 1 to 3,
   wherein said video surveillance system is configured to scramble using a predetermined code block size.

5. The smart video surveillance system as recited in claim 4,
   wherein said predetermined code block size is 8 x 8.

6. The smart video surveillance system as recited in claim 4,
   wherein said predetermined code block size is 16 x 16.

7. The smart video surveillance system as recited in claim 4,
   wherein said predetermined code block size is 32 x 32.

**EP 2 164 056 A2**

8. The smart video surveillance system as recited in anyone of claims 1 to 7,
wherein said video surveillance system is configured to scramble using a predetermined user selectable scrambling co-efficient.

28

20

Ethernet          Ethernet

Access Point

24

30

22

Internet

Application server
and Web server

Camera side
(Capture, processing and transmission)

26

Ethernet

Access Point

Modem

32

Different users connecting to the web
server

## Fig. 1

38          40          42          44          46

| Capture Device | Video Analysis | Video Encoding | Security | Transmission |

## Fig. 2

**Fig. 3**

**Fig. 4**

**Fig. 5**

FIG.6A

FIG.6B

Fig. 7A

Fig. 7B

Fig. 7C

Fig. 8A

Fig. 8B

Fig. 8C

Fig. 9A

Fig. 9B

Fig. 9C

Fig. 9D

Fig. 9E

Fig. 9F

Fig. 10A

Fig. 10B

Fig. 11A

Fig. 11B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60593238 B
- US 5835616 A
- US 5991429 A
- US 6496594 B
- US 6751340 B
- US 20020064314 A1
- US 20020U4464 A3
- US 20040005086 A1
- US 20040081338 A1
- US 20040175021 A
- US 20050013482 A1
- US 6509926 B
- US 6698021 B

### Non-patent literature cited in the description

- **Hampapur et al.** Smart Surveillance: Applications, Technologies and Implications. *Proceedings of the IEEE Pacific Rim Conference on Multimedia,* December 2003, vol. 2, 1133-1138
- **Cai et al.** Model Based Human Face Recognition in Intelligent Vision. *Proceedings of SPIE,* December 1996, vol. 2904, 88-99
- **Salembier et al.** Flat Zones Filtering Connected Operators and Filters by Reconstruction. *IEEE Transactions on Image Processing,* August 1995, vol. 4 (8), 1153-1160
- **Viola et al.** Rapid Object Detection Using a Boosted Cascade of Simple Features. *IEEE Proceedings CVPR,* December 2001, 511-518
- Empirical Analysis of Detection Cascades of Boosted Classifiers for Rapid Object Detection. **Lienhart et al.** MRL Technical Reports. Intel Labs, 2002
- **Skodras et al.** The JPEG 2000 Still Image Compression Standard. *IEEE Signal Processing Magazine,* September 2001, vol. 18, 36-58
- **Dufaux et al.** JPSEC for Secure Imaging in JPEG 2000. *Journal of SPIE Proceedings -Applications of Digital Image Processing,* November 2004, vol. XXVII, 319-330
- **Dufaux et al.** JPWL: JPEG 2000 for Wireless Applications. *Journal of SPJJE Proceedings- Applications of Digital Image Processing,* November 2004, vol. XXVII, 309-318
- **R.L. Rivest ; A. Shamir ; L.M. Adleman.** A method for obtaining digital signatures and public-key cryptosystems. *Communications of the ACM,* 1978, vol. 21 (2), 120-126
- **F. Dufaux ; S. Wee ; J. Apostolopoulos ; T. Ebrahimi.** JPSEC for secure imaging in JPEG 2000. *SPIE Proc. Applications of Digital Image Processing,* August 2004, vol. XXVII
- **F. Dufaux ; T. Ebrahimi.** Video Surveillance using JPEG 2000. *SPIE Proc. Applications of Digital Image Processing,* August 2004, vol. XXVII